(19)

Europäisches
Patentamt
European
Patent Office
Office européen
des brevets

(11) **EP 3 502 298 A1**

(12) **EUROPEAN PATENT APPLICATION**

(43) Date of publication:
**26.06.2019 Bulletin 2019/26**

(21) Application number: **18209304.7**

(22) Date of filing: **29.11.2018**

(51) Int Cl.:
*C22C 38/02* <sup>(2006.01)</sup>     *C22C 38/04* <sup>(2006.01)</sup>
*C22C 38/06* <sup>(2006.01)</sup>     *C22C 38/40* <sup>(2006.01)</sup>
*C22C 38/50* <sup>(2006.01)</sup>     *C22C 38/58* <sup>(2006.01)</sup>
*B33Y 10/00* <sup>(2015.01)</sup>     *B22F 3/00* <sup>(2006.01)</sup>
*B22F 3/105* <sup>(2006.01)</sup>     *B23K 15/00* <sup>(2006.01)</sup>
*B23P 23/00* <sup>(2006.01)</sup>     *B33Y 80/00* <sup>(2015.01)</sup>
*B33Y 70/00* <sup>(2015.01)</sup>     *B33Y 30/00* <sup>(2015.01)</sup>
*B33Y 50/02* <sup>(2015.01)</sup>     *B23K 26/342* <sup>(2014.01)</sup>
*B23K 35/30* <sup>(2006.01)</sup>     *B23K 26/00* <sup>(2014.01)</sup>
*B23K 101/22* <sup>(2006.01)</sup>     *B23K 101/32* <sup>(2006.01)</sup>

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.11.2017 US 201762592045 P
13.11.2018 US 201816189117**

(71) Applicant: **Lincoln Global, Inc.
Santa Fe Springs, CA 90670 (US)**

(72) Inventors:
• **NARAYANAN, Badri K.
Highland Heights OH 44143 (US)**
• **KOTTMAN, Michael A
OH 44102 (US)**
• **RAJAN, Vaidyanath Bharata
OH 44060 (US)**

(74) Representative: **Grosse Schumacher Knauer von
Hirschhausen
Patent- und Rechtsanwälte
Frühlingstrasse 43A
45133 Essen (DE)**

(54) **METHODS AND COMPOSITIONS FOR MAKING A NEAR NET SHAPE ARTICLE**

(57) Methods and compositions for making a near net shape article are provided. The method includes depositing a first material using an additive manufacturing technique to form a near net shape article, such as tooling. The first material has a low carbon content yet possesses sufficient hardness so that the article may be used in various tooling applications.

**EP 3 502 298 A1**

**Description**

CROSS REFERENCE TO RELATED APPLICATIONS

This application claims priority to and the benefit of U.S. Provisional Patent Application No. 62/592,045, filed November 29, 2017, the entire disclosure of which is incorporated herein by reference in full.

FIELD

The invention relates to a method of making a near net shape article according to the preamble of claim 1. The general inventive concepts relate to methods and compositions for making a near net shape article. More particularly, the general inventive concepts relate to additive manufacturing methods for making near net shape articles using low carbon content alloy materials that possess sufficient hardness for use in various applications.

BACKGROUND

Additive manufacturing has been utilized to manufacture functional metal parts in various fields of technology including automobiles, aerospace, and medical devices, just to name a few. Unlike conventional manufacturing processes, metal additive manufacturing techniques permit complex geometry and functional part fabrication by adding thin layers of metal based on a digital model (*e.g.*, a CAD model) without the need for expensive tooling and assembly.
Manufacturing tooling with tool steels via additive manufacturing techniques is very difficult because of the hard and brittle nature of the additively deposited tool steel material. Indeed, tool steels typically have a carbon content of 0.5 wt% to 1.5 wt% to produce tooling that has the required hardness for a given tooling application. However, the carbon content of such tool steels is also a primary factor leading to the brittleness of the additively deposited material.
Accordingly, there remains a need for additive manufacturing methods and compositions that produce tooling that exhibits good hardness as well as toughness for various tooling applications.

SUMMARY

The invention provides a method of making a near net shape article according to claim 1. The general inventive concepts thus relate to methods and compositions for making a near net shape article, such as tooling. To illustrate various aspects of the general inventive concepts, several exemplary embodiments of the method and composition are disclosed.
In one aspect of the present disclosure, a method of making a near net shape article is provided. The method includes depositing a first material using an additive manufacturing technique to form a near net shape article. The first material comprises at least 8 wt% Cr, and less than or equal to 0.15 wt% C. The first material is deposited via the additive manufacturing technique at a rate of at least 112 cm$^3$/hr. The first material as-deposited has a hardness (Rockwell C Scale) of 25 HRC to 50 HRC.
In another aspect of the present disclosure, a method of making a near net shape article is provided. The method includes depositing a first material using an additive manufacturing technique to form a near net shape article. The first material comprises 11 wt% to 14 wt% Cr, and 0.02 wt% to 0.15 wt% C. The first material is deposited via the additive manufacturing technique at a rate of 112 cm$^3$/hr to 570 cm$^3$/hr. The first material as-deposited has a hardness (Rockwell C Scale) of 25 HRC to 50 HRC.
Other aspects, advantages, and features of the general inventive concepts will become apparent to those skilled in the art from the following detailed description and claims.

DETAILED DESCRIPTION

While the general inventive concepts are susceptible of embodiment in many different forms, there will be described herein in detail, specific embodiments thereof with the understanding that the present disclosure is to be considered as an exemplification of the principles of the general inventive concepts. Accordingly, the general inventive concepts are not intended to be limited to the specific embodiments illustrated herein.
The present description discloses exemplary methods and compositions for making a near net shape article. The exemplary methods and compositions of the present disclosure utilize an additive manufacturing technique that employs a first material to fabricate near net shape articles (*e.g.*, tooling) that possess good hardness while having a low carbon content (*e.g.*, ≤ 0.15 wt% C). The low carbon content of the first material makes the first material well suited for deposition via an additive manufacturing technique. However, to achieve a hardness similar to articles fabricated with conventional tool steels, which typically have a higher carbon content (*e.g.*, 0.5 wt% to 1.5 wt% C), alloying elements including, but not limited to, Mn, Cr, Mo, Ni, Si, and B are used to provide the first material with the required carbon equivalent to attain hardness characteristics similar to conventional tool steels.

The carbon equivalent (CEN) provides a measure of the hardenability obtainable in the as-deposited material by adding alloying elements in place of carbon at a given nominal carbon content. The CEN values described in the present disclosure are derived from the formula below:

$$CEN = C + A(C) \times \left( \frac{Si}{24} + \frac{Mn}{6} + \frac{Cu}{15} + \frac{Ni}{60} + \frac{Cr + Mo + Nb + V}{5} + 5B \right)$$

where $A(C) = 0.75 + 0.25 \tanh\{20 \times (C - 0.12)\}$. Accordingly, materials having a low carbon content (*e.g.*, $\leq 0.15$ wt% C), which are typically not suitable for fabricating tooling due to a lack of hardness, can be formulated to provide a hardness similar to conventional tool steels by ensuring that the CEN of the material corresponds to the carbon content present in conventional tool steels.

In one aspect of the present disclosure, a method of making a near net shape article is provided. The method includes depositing a first material using an additive manufacturing technique to form a near net shape article. The first material comprises at least 8 wt% Cr, and less than or equal to 0.15 wt% C. The first material is deposited via the additive manufacturing technique at a rate of at least 112 cm³/hr. The first material as-deposited has a hardness (Rockwell C Scale) of 25 HRC to 50 HRC.

In another aspect of the present disclosure, a method of making a near net shape article is provided. The method includes depositing a first material using an additive manufacturing technique to form a near net shape article. The first material comprises 11 wt% to 14 wt% Cr, and 0.02 wt% to 0.15 wt% C. The first material is deposited via the additive manufacturing technique at a rate of 112 cm³/hr to 570 cm³/hr. The first material as-deposited has a hardness (Rockwell C Scale) of 25 HRC to 50 HRC.

Generally, the near net shape article is built up layer-by-layer by depositing the first material in multiple passes performed by the additive manufacturing technique. A variety of additive manufacturing techniques may be used to deposit the first material to form the near net shape article. The additive manufacturing technique may be a powder-based technique that utilizes a powder feedstock, or a wire fed technique that utilizes a wire feedstock. Accordingly, the materials utilized in the methods of the present disclosure may be provided in powder form and/or wire form.

Exemplary powder-based additive manufacturing techniques that may be used in the methods of the present disclosure include, but are not limited to, laser metal deposition, laser engineered net shaping, electron beam melting, powder-fed directed-energy deposition, selective laser sintering, and direct metal laser sintering. Powder-based additive manufacturing techniques build up articles in a layer-by-layer manner by sintering or melting a powder material using an energy source (*e.g.*, laser beam, electron beam). In certain powder-based additive manufacturing techniques the powder material to be sintered or melted by the energy source is supplied by a reservoir and spread evenly over a build plate using a recoater arm to maintain the powder material at a desired level and to remove excess powder material extending above the desired level. The energy source sinters or melts a cross sectional layer of the article being built under control of a scanner system (*e.g.*, galvo scanner). After a layer is complete, the build plate is lowered, and another layer of powder is spread over the build plate and the article being built, followed by successive sintering/melting of the powder material by the energy source. The process is repeated until the article is completely built up from the sintered/melted powder material. The energy source may be controlled by a computer system including a processor and a memory. The computer system may determine a scan pattern (*e.g.*, based on a computer aided design (CAD) model file) for each layer and control the energy source to sinter/melt the powder material according to the scan pattern.

In other powder-based additive manufacturing techniques, the article is built up in stacked layers by sintering or melting a powder material that is fed though a nozzle. In certain systems, the powder material may be fed along with a shield gas. As the powder material is fed, the powder material is sintered or melted into a melt pool by an energy source (*e.g.*, laser beam, electron beam). The article may be built on a substrate, which can be removed after the article is built. The melt pool formed when the energy source melts and/or sinters the powder material solidifies to form at least a portion of the article. Either the powder fed additive manufacturing apparatus, the substrate, or both may be lowered and/or moved to melt the powder material on any portion of the substrate and/or on a previously solidified portion of the article until the article is completely built up from a plurality of deposited layers. The energy source may be controlled by a computer system including a processor and a memory. The computer system may determine a predetermined path for each melt pool and subsequently solidified layer to be formed (*e.g.*, based on a computer aided design (CAD) model file), and controls the energy source to sinter/melt the powder material according to a pre-programmed path.

Exemplary wire fed additive manufacturing techniques include, but are not limited to, laser wire metal deposition, wire arc additive manufacturing, electron beam additive manufacturing, and automated welding. In general, conventional wire fed additive manufacturing apparatus can be configured to build articles in a layer-by-layer manner by feeding a wire feedstock material, which is fed by a wire feeding apparatus and melting the wire feedstock material. Prior to physically building up the article, the additive manufacturing process often begins with the creation of a computer aided design (CAD) file to represent an image or drawing of a desired article. Using a computer, information about the article image file is extracted, such as by identifying information corresponding to individual layers of the article. Thus, to derive data needed to form an article by additive manufacturing, the article is conceptually sliced into many thin layers with the contours of each layer being defined by a plurality of line segments or data points connected to form polylines. The layer data may be converted to suitable tool path data, such as data that is manipulated by, or in the form of, computer numerical control (CNC) codes, such as G-codes, M-codes, or the like. These codes may be utilized to control the wire fed additive manufacturing apparatus for building an article layer-by-layer.

In a wire fed additive manufacturing technique, the wire feedstock material used to build the article is melted using an energy source (*e.g.*, an electron beam, a laser beam, an electrical arc). The building of the article may be performed on a build substrate. The energy source melts the wire feedstock material to form a melt pool, which solidifies to form at least a portion of the article. The wire fed additive manufacturing apparatus, the substrate, or both may be raised, lowered, or otherwise moved, while melting the wire feedstock material on any portion of the substrate, and/or on a previously solidified portion until the article is completely built up from a plurality of layers formed from the melted wire feedstock material. The energy source is typically controlled by a computer system that includes a processor and a memory. The computer system determines a predetermined path for each melt pool and subsequently solidified layer to be formed, and the energy source melts the wire feedstock material according to a pre-programmed path.

In embodiments, the additive manufacturing technique used to deposit the first material comprises a powder-based additive manufacturing technique, a wire fed additive manufacturing technique, or a combination of a powder-based additive manufacturing technique and a wire fed additive manufacturing technique. In embodiments, the additive manufacturing technique is a powder-based additive manufacturing technique and the first material is in powder form. In embodiments, the additive manufacturing technique is a wire fed additive manufacturing technique and the first material is in wire form. Any of the previously mentioned powder-based additive manufacturing techniques and/or wire fed additive manufacturing techniques may be used in the methods of the present disclosure to deposit the first material.

As mentioned above, the first material is deposited via the additive manufacturing technique at a deposition rate of at least 112 cm$^3$/hr. In embodiments, the first material is deposited via the additive manufacturing technique at a deposition rate of 112 cm$^3$/hr to 570 cm$^3$/hr, including a deposition rate of 112 cm$^3$/hr to 490 cm$^3$/hr, 112 cm$^3$/hr to 455 cm$^3$/hr, 150 cm$^3$/hr to 415 cm$^3$/hr, 170 cm$^3$/hr to 375 cm$^3$/hr, 225 cm$^3$/hr to 330 cm$^3$/hr, and also including a deposition rate of 165 cm$^3$/hr to 340 cm$^3$/hr. In general, powder-based additive manufacturing techniques used to deposit metal materials have a lower deposition rate as compared to wire fed additive manufacturing techniques. However, powder-based additive manufacturing techniques are generally able to build more precise articles than wire fed additive manufacturing techniques.

In embodiments, the methods of the present disclosure may further comprise applying a subtractive manufacturing technique after depositing the first material. In embodiments, the methods of the present disclosure may further comprise applying a subtractive manufacturing technique after depositing the first material prior to completely forming the near net shape article (*e.g.*, after one or more layers of the first material is deposited, after each layer of the first material is deposited). A variety of subtractive manufacturing techniques may be utilized in the methods of the present disclosure. Exemplary subtractive manufacturing techniques include, but are not limited to, milling, turning, and drilling. Such subtractive manufacturing techniques are well known to those skilled in the art and may be carried out using, for example, conventional CNC machining equipment. Accordingly, in embodiments of the present disclosure that include the application of a subtractive manufacturing technique, the subtractive manufacturing technique comprises milling, turning, drilling, or combinations thereof.

In embodiments, the near net shape article may be subjected to a post-fabrication thermal treatment. Such thermal treatments may include heat treatments, cooling treatments, or both heat treatments and cooling treatments. Examples of suitable thermal treatments for use in the methods of the present disclosure include, but are not limited to, annealing, quenching, tempering, and hot isostatic pressing. Accordingly, in embodiments, the methods of the present disclosure may further comprise a heat treatment, a cooling treatment, or both a heat treatment and a cooling treatment, and such heat treatment and/or cooling treatment may be performed during fabrication of the near net shape article, after the near net shape article is fabricated, and/or after the near net shape article is subjected to a subtractive manufacturing technique.

The first material of the present disclosure is an alloy material that comprises at least 8 wt% Cr, and less than or equal to 0.15 wt% C. The low carbon content of the first material promotes ease of deposition via additive manufacturing techniques and the chromium content provides hardenability. Indeed, in accordance with the present disclosure, the first material as-deposited via an additive manufacturing technique has a hardness of 25 HRC to 50 HRC. In embodiments, the first material as-deposited via an additive manufacturing technique has a hardness of 30 HRC to 45 HRC, including from 32 HRC to 44 HRC, from 32 HRC to 42 HRC, from 32 HRC to 40 HRC, from 32 HRC to 38 HRC, and also including from 32 HRC to 35 HRC. In embodiments, the he first material as-deposited via an additive manufacturing technique has a hardness of 32 HRC to 48 HRC, including from 32 HRC to 44 HRC, from 35 HRC to 44 HRC, from 38 HRC to 44 HRC, from 40 HRC to 44 HRC, and also including from 42 HRC to 44 HRC.

As discussed above, the first material of the present disclosure may be in powder form for use in a powder-based additive manufacturing technique, or in wire form for use in a wire fed additive manufacturing technique. Preferably, the first material is provided in wire form to avoid the handling systems and processes required for powder material. The first material of the present disclosure may be formulated so that the undiluted deposit produced by the first material has an as-deposited chemical composition as set forth in Table 1. As appreciated in the art, the undiluted deposit composition of the first material is the composition of the deposit produced without contamination from any other source.

TABLE 1: As-Deposited Composition of the First Material, wt.%

| Ingredient | Embodiment A | Embodiment B | Embodiment C |
|---|---|---|---|
| Carbon | 0.02 - 0.15 | 0.05 - 0.15 | 0.05 - 0.1 |
| Manganese | 0.5 - 2 | 0.75 - 1.95 | 0.78 - 1.9 |
| Silicon | 0.25 - 0.8 | 0.35 - 0.7 | 0.4 - 0.65 |
| Chromium | 8 - 14 | 11 - 13.25 | 11.4 - 13.1 |
| Nickel | 0.1 - 5.5 | 1.9 - 5.25 | 3.4 - 5.15 |
| Molybdenum | ≤ 1.5 | 0.6 - 1.45 | 0.65 - 1.45 |
| Vanadium | ≤ 0.4 | ≤ 0.35 | 0.01 - 0.35 |
| Tungsten | ≤ 0.4 | ≤ 0.35 | ≤ 0.3 |
| Iron | balance | balance | balance |

In embodiments, the first material of the present disclosure may have a carbon equivalent (CEN) of 1.4 to 2, including from 1.5 to 1.95, from 1.55 to 1.9, from 1.55 to 1.86, and also including from 1.64 to 1.8. In embodiments, the first material of the present disclosure may have a carbon equivalent (CEN) of 1.5 to 2, including from 1.55 to 1.95, from 1.58 to 1.95, from 1.64 to 1.9, and also including from 1.65 to 1.86. In embodiments, the first material may have an A(C) of 0.5 to 0.7, a CEN of 1.5 to 2.2, and a chromium content of 11 wt% to 14 wt%.

Examples of commercially available wire products suitable for use as the first material in accordance with the present disclosure are set forth in Table 2, in terms of their undiluted, as-deposited chemical compositions, as well as the as-deposited hardness (Rockwell C scale), the A(C) value, and the CEN value. The values listed in Table 2 may vary within plus or minus 10%. Each of the wire products listed in Table 2 are available from The Lincoln Electric Company (Cleveland, Ohio).

TABLE 2: Undiluted, As-Deposited Composition, wt.%

| Ingredient | Lincore® 410 | Lincore® 410NiMo | Lincore® 424A | Lincore® 423N | Lincore® 414N |
|---|---|---|---|---|---|
| Carbon | 0.08 | 0.05 | 0.09 | 0.06 | 0.06 |
| Manganese | 0.8 | 0.8 | 0.8 | 1.88 | 1.27 |
| Silicon | 0.4 | 0.5 | 0.4 | 0.63 | 0.6 |
| Chromium | 12.5 | 13 | 13 | 11.5 | 12.5 |
| Nickel | 0.2 | 2 | 4.5 | 3.8 | 3.5 |
| Molybdenum | - | 1 | 1 | 1.4 | 0.7 |
| Vanadium | - | - | - | 0.3 | 0.02 |
| Tungsten | - | - | - | 0.3 | - |
| Iron | balance | balance | balance | balance | balance |
| Hardness | 32 | 35 | 40 | 42 | 44 |
| A(C) | 0.58 | 0.53 | 0.62 | 0.54 | 0.54 |
| CEN | 1.55 | 1.58 | 1.86 | 1.65 | 1.59 |

In embodiments, the methods of the present disclosure may further include depositing a second material onto at least a portion of the first material. In embodiments, the second material as-deposited has a hardness of at least 160 HV (Vickers Hardness) at a temperature of 200 °C to 500 °C. In embodiments, the second material as-deposited has a hardness of 160 HV to 675 HV at a temperature of 200 °C to 500 °C, including a hardness of 175 HV to 675 HV at a temperature of 200 °C to 500 °C, a hardness of 200 HV to 675 HV at a temperature of 200 °C to 500 °C, a hardness of 225 HV to 650 HV at a temperature of 200 °C to 500 °C, and also including a hardness of 250 HV to 650 HV at a temperature of 200 °C to 500 °C. In embodiments, the second material as-deposited has a hardness of 225 HV to 650 HV at a temperature of 300 °C, including a hardness of 225 HV to 600 HV at a temperature of 300 °C, a hardness of 225 HV to 575 HV at a temperature of 300 °C.

A variety of techniques may be utilized to deposit the second material onto at least a portion of the first material. In embodiments, the second material may be deposited using an additive manufacturing technique. In embodiments, the additive manufacturing technique used to deposit the second material onto at least a portion of the first material comprises a powder-based additive manufacturing technique, a wire fed additive manufacturing technique, or a combination of a powder-based additive manufacturing technique and a wire fed additive manufacturing technique. Accordingly, in embodiments of the methods of the present disclosure, the second material may be a powder material or a wire material. Any of the previously mentioned powder-based additive manufacturing techniques and/or wire fed additive manufacturing techniques may be used in the methods of the present disclosure to deposit the second material onto at least a portion of the first material.

In embodiments, the second material may be deposited using a thermal spray process. Exemplary thermal spray processes suitable for use in the methods of the present disclosure include, but are not limited to, plasma spraying, detonation spraying, wire arc spraying, flame spraying, high-velocity oxygen fuel spraying, high-velocity air fuel spraying, warm spraying, and cold spraying.

In embodiments, the second material may be deposited using a diffusion bonding process. In embodiments, the second material may be deposited using a physical vapor deposition (PVD) process. In general, the second material may be deposited using any conventional overlay process, including welding.

The second material may be used, for example, to provide a hard shell or a hard edge on a portion of the near net shape article formed by deposition of the first material. Exemplary materials suitable for use as the second material include, but are not limited to, maraging steels nickel-based alloys (such as Inconel® 625 alloy), and cobalt alloys. Suitable maraging steels for use as the second material include, but are not limited to, Type 18Ni1400, Type 18Ni1700, Type 18Ni1900, and Type 18Ni2400. Suitable cobalt alloys for use as the second material include, but are not limited to, cobalt 1 alloy, cobalt 6 alloy, cobalt 12 alloy, and cobalt 21 alloy.

As mentioned above, the second material of the present disclosure may be in powder form or in wire form. Preferably, the second material is provided in wire form to avoid the handling systems and processes required for powder material.

In embodiments, the second material of the present disclosure may have a carbon equivalent (CEN) of 1 to 2.7, including from 1.03 to 2.65, from 1.1 to 2.65, from 1.2 to 2.55, and also including from 1.3 to 2.3. In embodiments, the second material of the present disclosure may have a carbon equivalent (CEN) of 1.8 to 2.7, including from 1.9 to 2.65, from 1.95 to 2.55, from 2 to 2.4, and also including from 2.05 to 2.15.

In embodiments, the methods of the present disclosure may further comprise applying a subtractive manufacturing technique after depositing the second material onto the first material. Any one or more of the subtractive manufacturing techniques previously discussed may be used to remove or finish a portion of the shell layer.

In embodiments, the second material may be deposited onto the first material such that a thickness of the second material is up to 2.54 cm, including from 0.039 cm to 2.54 cm, from 0.079 cm to 2.54 cm, from 0.15 cm to 2.54 cm, from 0.31 cm to 2.54 cm, from 0.63 cm to 2.54 cm, from 1.27 cm to 2.54 cm, and also including from 1.9 cm to 2.54 cm. In embodiments, the second material may be deposited onto the first material such that a thickness of the second material is 0.039 cm to 2.54 cm, from 0.039 cm to 1.9 cm, from 0.039 cm to 1.27 cm, from 0.039 cm to 0.63 cm, from 0.039 cm to 0.31 cm, from 0.039 cm to 0.15 cm, and also including from 0.039 cm to 0.079 cm.

The near net shape articles fabricated in accordance with the methods of the present disclosure may be, for example, tooling. Examples of tooling include, but are not limited to, jigs, fixtures, dies, molds, machine tools, cutting tools, and gauges. Near net shape tooling fabricated in accordance with the present disclosure may be used in hot and/or cold environments, and may be resistant to one or more of impact, wear, deformation, corrosion, thermal shock, and erosion. Exemplary applications of such tooling include, but are not limited to, stamping, forging, or casting of metals via hot or cold processes, extruding metals or plastics, and processes that involve glass fibers or carbon fibers (*e.g.*, fiber chopping operations).

All percentages, parts, and ratios as used herein, are by weight of the total composition, unless otherwise specified. All such weights as they pertain to listed ingredients are based on the active level and, therefore, do not include solvents or by-products that may be included in commercially available materials, unless otherwise specified.

All references to singular characteristics or limitations of the present disclosure shall include the corresponding plural characteristic or limitation, and vice versa, unless otherwise specified or clearly implied to the contrary by the context in which the reference is made.

All combinations of method or process steps as used herein can be performed in any order, unless otherwise specified or clearly implied to the contrary by the context in which the referenced combination is made.

All ranges and parameters, including but not limited to percentages, parts, and ratios, disclosed herein are understood to encompass any and all sub-ranges assumed and subsumed therein, and every number between the endpoints. For example, a stated range of "1 to 10" should be considered to include any and all subranges between (and inclusive of) the minimum value of 1 and the maximum value of 10; that is, all subranges beginning with a minimum value of 1 or more (*e.g.*, 1 to 6.1), and ending with a maximum value of 10 or less (*e.g.*, 2.3 to 9.4, 3 to 8, 4 to 7), and finally to each number 1, 2, 3, 4, 5, 6, 7, 8, 9, and 10 contained within the range.

The methods and compositions of the present disclosure can comprise, consist of, or consist essentially of the essential elements and limitations of the disclosure as described herein, as well as any additional or optional ingredients, components, or limitations described herein.

The compositions of the present disclosure may also be substantially free of any optional or selected essential ingredient or feature described herein, provided that the remaining composition still contains all of the required ingredients or features as described herein. In this context, and unless otherwise specified, the term "substantially free" means that the selected composition contains less than a functional amount of the optional ingredient, typically less than 0.1% by weight, and also including zero percent by weight of such optional or selected essential ingredient.

To the extent that the terms "include," "includes," or "including" are used in the specification or the claims, they are intended to be inclusive in a manner similar to the term "comprising" as that term is interpreted when employed as a transitional word in a claim. Furthermore, to the extent that the term "or" is employed (*e.g.*, A or B), it is intended to mean "A or B or both A and B." When the Applicant intends to indicate "only A or B but not both," then the term "only A or B but not both" will be employed. Thus, use of the term "or" herein is the inclusive, and not the exclusive use. In the present disclosure, the words "a" or "an" are to be taken to include both the singular and the plural. Conversely, any reference to plural items shall, where appropriate, include the singular.

In some embodiments, it may be possible to utilize the various inventive concepts in combination with one another. Additionally, any particular element recited as relating to a particularly disclosed embodiment should be interpreted as available for use with all disclosed embodiments, unless incorporation of the particular element would be contradictory to the express terms of the embodiment. Additional advantages and modifications will be readily apparent to those skilled in the art. Therefore, the disclosure, in its broader aspects, is not limited to the specific details presented therein, the representative apparatus, or the illustrative examples described. Accordingly, departures may be made from such details without departing from the spirit or scope of the general inventive concepts.

The scope of the general inventive concepts presented herein are not intended to be limited to the particular exemplary embodiments shown and described herein. From the disclosure given, those skilled in the art will not only understand the general inventive concepts and their attendant advantages, but will also find apparent various changes and modifications to the methods and compositions disclosed. It is sought, therefore, to cover all such changes and modifications as fall within the spirit and scope of the general inventive concepts, as described and/or claimed herein, and any equivalents thereof.

The scope of the claims presented herein are not limited in any way by the description and exemplary embodiments of the present disclosure. In addition, the ordinary meanings of the terms used throughout the present disclosure are not limited in any way by the description and exemplary embodiments presented herein. All of the terms presented throughout the present disclosure retain all of their many potential ordinary meanings.

## Claims

1. A method of making a near net shape article, the method comprising:

   depositing a first material using an additive manufacturing technique to form a near net shape article, **characterized in that** the first material comprises at least 8 wt% Cr, and less than or equal to 0.15 wt% C; wherein the first material is deposited at a rate of at least 112 cm$^3$/hr; and wherein the first material as-deposited preferably has a hardness of 25 HRC to 50 HRC.

2. The method according to claim 1, wherein the first material comprises 11 wt% to 14 wt% Cr, and 0.02 wt% to 0.15 wt% C; wherein the first material is deposited at a rate of 112 cm$^3$/hr to 570 cm$^3$/hr; and wherein the first material as-deposited has a hardness of 25 HRC to 50 HRC.

3. The method of claim 1, wherein the first material comprises:

   0.02 wt% to 0.15 wt% C;
   0.5 wt% to 2 wt% Mn;
   0.25 wt% to 0.8 wt% Si;
   8 wt% to 14 wt% Cr;
   0.1 wt% to 5.5 wt% Ni;
   $\leq$ 1.5 wt% Mo;
   $\leq$ 0.4 wt% V;
   $\leq$ 0.4 wt% W;
   with the balance being Fe and incidental impurities.

4. The method of claim 1, wherein the first material comprises:

   0.05 wt% to 0.15 wt% C;
   0.75 wt% to 1.95 wt% Mn;
   0.35 wt% to 0.7 wt% Si;
   11 wt% to 13.25 wt% Cr;
   0.15 wt% to 4.6 wt% Ni;
   $\leq$ 1.45 wt% Mo;
   $\leq$ 0.35 wt% V;
   $\leq$ 0.35 wt% W;
   with the balance being Fe and incidental impurities.

5. The method according to one of the claims 1 to 4, wherein the first material has a carbon equivalent (CEN) of 1.4 to 2.

6. The method of one of the claims 1 to 5, wherein the additive manufacturing technique is a powder-based additive manufacturing technique and the first material is in powder form.

7. The method of one of the claims 1 to 5, wherein the additive manufacturing technique is a wire fed additive manufacturing technique and the first material is in wire form.

8. The method according to one of the claims 1 to 7, further comprising applying a subtractive manufacturing technique after depositing the first material,

9. The method according to claim 8, wherein the subtractive manufacturing technique comprises one or more of milling, turning, and drilling.

10. The method according to one of the claims 1 to 9, further comprising applying a post-fabrication thermal treatment to the near net shape article.

11. The method according to one of the claims 1 to 10, further comprising depositing a second material onto at least a portion of the first material, wherein the second material as-deposited has a hardness of at least 160 HV at a temperature of 200 °C to 500 °C.

12. The method according to claim 11, wherein the second material has a hardness of 175 HV to 675 HV at a temperature of 200 °C to 500 °C.

13. The method according to claim 11, wherein the second material has a hardness of 225 HV to 650 HV at a temperature of 300 °C.

## EUROPEAN SEARCH REPORT

| | Application Number |
|---|---|
| | EP 18 20 9304 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAYODE ABIODUN ET AL: "Effect of scanning speed on laser deposited 17-4PH stainless steel", 2017 8TH INTERNATIONAL CONFERENCE ON MECHANICAL AND INTELLIGENT MANUFACTURING TECHNOLOGIES (ICMIMT), IEEE, 3 February 2017 (2017-02-03), pages 1-5, XP033091545, DOI: 10.1109/ICMIMT.2017.7917404 [retrieved on 2017-05-02] | 1,5,6,8,9 | INV.<br>C22C38/02<br>C22C38/04<br>C22C38/06<br>C22C38/40<br>C22C38/50<br>C22C38/58<br>B33Y10/00<br>B22F3/00<br>B22F3/105 |
| Y | * abstract *<br>* pages 2,3; tables 1,2 *<br>----- | 3,4 | B23K15/00<br>B23P23/00<br>B33Y80/00 |
| X | US 2015/044084 A1 (HOFMANN DOUGLAS C [US] ET AL) 12 February 2015 (2015-02-12) | 1,6-13 | B33Y70/00<br>B33Y30/00 |
| Y | * paragraphs [0029], [0065], [0067], [0068], [0079], [0080]; claims 1,9,10,24; figures 1,3d *<br>----- | 3,4 | B33Y50/02<br>B23K26/342<br>B23K35/30 |
| X | DE 10 2007 056259 A1 (CL SCHUTZRECHTSVERWALTUNGS GMBH [DE]) 4 June 2009 (2009-06-04) | 1,2,5,6,8-13 | |
| Y | * abstract *<br>* paragraphs [0005] - [0009]; claims 1,3 *<br>----- | 3,4 | |
| X | US 2016/251736 A1 (SHIMIZU TAKAYASU [JP]) 1 September 2016 (2016-09-01) | 1,2,5,6,8-10 | |
| Y | * paragraphs [0079], [0082], [0057], [0093]; claims 1,7,10,11; figure 10; table 1 *<br>----- | 3,4 | |
| Y | GB 1 239 587 A (BOFORS AB) 21 July 1971 (1971-07-21) | 3,4 | |
| A | * page 2, column 1, lines 43-58; claim 1; tables 4,5 *<br>----- | 1,2,5-13 | |
| | -/-- | | |

**TECHNICAL FIELDS SEARCHED (IPC)**

C22C
B33Y
B23P
B23K
B22F
B32B
B29C
C21D

The present search report has been drawn up for all claims

| Place of search | Date of completion of the search | Examiner |
|---|---|---|
| The Hague | 6 March 2019 | Rausch, Elisabeth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 18 20 9304

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ABE TAKEYUKI ET AL: "Dissimilar metal deposition with a stainless steel and nickel-based alloy using wire and arc-based additive manufacturing", PRECISION ENGINEERING, ELSEVIER, AMSTERDAM, NL, vol. 45, 25 March 2016 (2016-03-25), pages 387-395, XP029521595, ISSN: 0141-6359, DOI: 10.1016/J.PRECISIONENG.2016.03.016 * abstract; figure 8; tables 1,2 * * figures 1,2 * | 1-13 | B23K26/00 B23K101/22 B23K101/32 B23K103/04 B32B15/01 C21D6/00 C21D9/00 C22C38/22 C22C38/24 B29C64/153 B29C64/336 C21D1/18 B22F3/24 |
| A | EP 3 213 863 A1 (NANFANG ADDITIVE MFG TECH CO LTD [CN]) 6 September 2017 (2017-09-06) * paragraphs [0006], [0011], [0015], [0019], [0026], [0027]; claims 1,2,9 * | 1-13 | |
| A | EP 2 555 902 A1 (SCIAKY INC [US]) 13 February 2013 (2013-02-13) * paragraphs [0026], [0029], [0046], [0057], [0059]; claims 1,2 * | 1-13 | |

TECHNICAL FIELDS
SEARCHED      (IPC)

The present search report has been drawn up for all claims

| Place of search | Date of completion of the search | Examiner |
|---|---|---|
| The Hague | 6 March 2019 | Rausch, Elisabeth |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 18 20 9304

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2019

| Patent document cited in search report | | | Publication date | Patent family member(s) | | | Publication date |
|---|---|---|---|---|---|---|---|
| US 2015044084 | A1 | | 12-02-2015 | US | 2015044084 | A1 | 12-02-2015 |
| | | | | WO | 2013112217 | A2 | 01-08-2013 |
| DE 102007056259 | A1 | | 04-06-2009 | NONE | | | |
| US 2016251736 | A1 | | 01-09-2016 | DE | 102016202885 | A1 | 01-09-2016 |
| | | | | JP | 2016160454 | A | 05-09-2016 |
| | | | | US | 2016251736 | A1 | 01-09-2016 |
| GB 1239587 | A | | 21-07-1971 | AT | 287431 | B | 25-01-1971 |
| | | | | BE | 723863 | A | 16-04-1969 |
| | | | | CH | 530841 | A | 30-11-1972 |
| | | | | DE | 1808014 | A1 | 12-06-1969 |
| | | | | DK | 121832 | B | 06-12-1971 |
| | | | | FR | 1591973 | A | 04-05-1970 |
| | | | | GB | 1239587 | A | 21-07-1971 |
| | | | | NL | 6816177 | A | 20-05-1969 |
| | | | | NO | 120008 | B | 10-08-1970 |
| | | | | SE | 308350 | B | 10-02-1969 |
| EP 3213863 | A1 | | 06-09-2017 | CN | 104526171 | A | 22-04-2015 |
| | | | | EP | 3213863 | A1 | 06-09-2017 |
| | | | | US | 2017320277 | A1 | 09-11-2017 |
| | | | | WO | 2016070778 | A1 | 12-05-2016 |
| EP 2555902 | A1 | | 13-02-2013 | AU | 2011233678 | A1 | 25-10-2012 |
| | | | | EP | 2555902 | A1 | 13-02-2013 |
| | | | | US | 2011240607 | A1 | 06-10-2011 |
| | | | | US | 2014158667 | A1 | 12-06-2014 |
| | | | | US | 2016016254 | A1 | 21-01-2016 |
| | | | | US | 2019015924 | A1 | 17-01-2019 |
| | | | | WO | 2011123195 | A1 | 06-10-2011 |

EPO FORM P0459

For more details about this annex : see Official Journal of the European Patent Office, No. 12/82

**REFERENCES CITED IN THE DESCRIPTION**

**Patent documents cited in the description**

- US 62592045 A